# EUROPÄISCHE PATENTSCHRIFT

(11) **EP 1 910 071 B1**
(45) Veröffentlichungstag und Bekanntmachung des Hinweises auf die Patenterteilung: **20.08.2014**
(21) Anmeldenummer: 06760786.1
(22) Anmeldetag: 13.07.2006
(51) Int. Cl.: B32B 3/26, B32B 37/18, F16F 7/12, B60R 19/18

(54) **VERFORMBARER KÖRPER MIT GERINGEM RAUMGEWICHT**
DEFORMABLE BODY HAVING A LOW SPECIFIC GRAVITY
CORPS DEFORMABLE A FAIBLE POIDS SPECIFIQUE

(30) Priorität: 20.07.2005 AT 12252005
(43) Veröffentlichungstag der Anmeldung: 16.04.2008
(73) Patentinhaber: LKR Leichtmetallkompetenzzentrum Ranshofen GmbH, 5282 Ranshofen (AT)
(72) Erfinder: SCHULZ, Peter, 84359 Simbach am Inn (DE); GRADINGER, Rudolf, A-2320 Schwechat (AT); REITER, Josef, A-5142 Eggelsberg (AT); KHALIL, Ziad, A-5280 Braunau am Inn (AT); BIRGMANN, Alois, A-5141 Moosdorf (AT)
(74) Vertreter: Wirnsberger, Gernot
(86) Internationale Anmeldenummer: PCT/AT2006/000299
(87) Internationale Veröffentlichungsnummer: WO 2007/009142

(56) Entgegenhaltungen:
- EP-A- 1 319 754
- EP-A1- 1 612 108
- EP-A2- 0 940 297
- DE-A1- 2 413 772
- DE-A1- 2 509 265
- DE-A1- 10 144 824
- DE-A1- 19 654 664
- US-A- 3 506 295
- US-A- 3 933 387
- US-A- 4 221 413
- US-A- 5 746 419
- US-A1- 2002 105 121
- US-A1- 2003 020 290

## Beschreibung

Die Erfindung bezieht sich auf einen Körper mit geringem Raumgewicht, welcher bei erhöhter Druckbeanspruchung volumsverkleinernd unter Energieaufnahme verformbar ist.

Insbesondere befasst sich die Erfindung mit Teilen, die in der Fahrzeug-, Schall- und Explosionstechnik als Sicherheits- und/oder Dämpfungskomponenten einsetzbar sind.

Teile, die einerseits ein geringes Raumgewicht und/oder die bis zu einer bestimmten Druckbeanspruchung hohe Steifigkeit aufweisen, andererseits sich bei weiterer Erhöhung der Druckspannungen mit Energieaufnahme volumsverkleinernd verformen, sind bekannt. Als wichtigste Ausführungsform in dieser Gattung sind die so genannten Schaummetallteile zu nennen.

Des Vorteils eines geringen Gewichtes wegen wurde schon vorgeschlagen, Felgen für Automobile, Motoraufhängungen und dergleichen zumindest teilweise aus porigen oder geschäumten Metallen, mit Vorzug aus geschäumten Leichtmetallen, herzustellen.

Metallteile mit einer inneren Porosität bzw. mit Hohlräumen verformen sich ab einer kritischen Druckbelastung bei im Wesentlichen gleich bleibender oder nur geringfügig ansteigender Druckkraft unter Aufnahme von Energie, wobei die die Form stützenden Stege zwischen den Hohlräumen einknicken und die Struktur in sich zusammenfällt.

Derartige Teile werden als Sicherheitskomponenten, beispielsweise als Stoßfänger und dergleichen, im Fahrzeugbau in steigendem Maße verwendet. Die dadurch im "Crash-Fall" verlängerten Verformungswege bei Kraftbegrenzungen können wesentlich zur Verletzungsminderung oder zum Überleben der Fahrzeugbenutzer beitragen.

Schaummetall hat jedoch Nachteile hinsichtlich der Teilegeometrie und der Kriterien einer energieverzehrenden Verformung. Zum einen sind dünne, großflächige Teile aus Metallschaum, welcher schmelzmetallurgisch durch Schäumen von Flüssigmetall hergestellt wird, schwer zu fertigen. Zum anderen ist das so genannte "Collapse-Verhalten" von Schaumteilen im Wesentlichen richtungsunabhängig und wird durch die Faktoren Porengröße, Größenverteilung der Hohlräume, Porenwandausbildung und dergleichen stark beeinflusst. Ein Verhalten bei einer Verformung des Teiles ist daher nur in weiten Grenzen einschätzbar und/oder erfordert einen hohen Erzeugungs- und Erprobungsaufwand.

Hier will die Erfindung die Einschränkungen und Nachteile im Stand der Technik überwinden und zielt darauf ab, einen Körper der eingangs genannten Art zu schaffen, der mit hoher Präzision hinsichtlich der von diesem geforderten Gewichtsausmaßen und Verformungseigenschaften hergestellt und vielfältig eingesetzt werden kann. Weiters soll das erfindungsgemäße Teil bei Explosionen und Schallbeaufschlagung dämpfende Wirkung besitzen.

Dieses Ziel wird bei einem gattungsgemäßen Körper dadurch erreicht, dass der Körper aus mindestens zwei in einem Stapel angeordneten Schichten besteht und jede Schicht in der Fläche verteilt mit beidseitig Anlagen für eine Folgeschicht oder für Abstützungen aufweisenden Massebereichen und Freiräumen gebildet ist, wobei im Stapel die Schichten derart positioniert sind, dass jeweils die Massebereiche außerhalb von Anlageflächen mit Freiräumen einer benachbarten Schicht korrespondieren.

Im Folgenden soll vorerst der Begriff Schicht kurz näher dargelegt werden. Eine Schicht ist dreidimensional flächig, also mit einer bedeutsamen Höhe ausgeformt und kann gekrümmt sein.

Die Erfindung nützt die mechanischen Eigenschaften von Werkstoffen nach einem Überschreiten von deren jeweiliger Elastizitätsgrenze. Mit anderen Worten: Wird ein massiver Körper mechanisch in steigendem Maße beansprucht, so verformt sich dieser entsprechend den Eigenschaften des Werkstoffes vorerst bis zu einer Spannungsgrenze elastisch, worauf nach dieser Grenze eine bleibende Formänderung eintritt. Diese plastische Verformung des Werkstoffes kann teilweise bei gleich bleibender Spannung erfolgen, führt jedoch letztlich zu einer Materialverfestigung und gegebenenfalls zu einem Bruch des Körpers, was jeweils mit einer wesentlichen Energieaufnahme verbunden ist.

Die Vorteile eines erfindungsgemäßen Gegenstandes sind im Wesentlichen darin zu sehen, dass sich zum einen durch einen zum Einsatz kommenden bestimmten Werkstoff oder durch eine Werkstoffkombination, durch eine geometrische Form von zusammenhängenden oder positionierten Massebereichen und Freiräumen einer Schicht sowie durch die jeweilige(n) Höhe(n) der Schicht und deren Anzahl im Stapel jegliche gewünschte Ausbildung eines Kraft-Weg-Verlaufes des Körpers und somit einer Energieaufnahme desselben bei einer bestimmten Verformung genau einstellen lässt. Zum anderen können problemlos großflächige dreidimensional gekrümmte Körper in verschiedenster Bauweise hergestellt werden, wobei auch ein seitliches Aneinanderlegen von Schichtteilen zur Bildung einer Schicht gegebenenfalls mit einem Überdecken der Trennung durch die benachbarte(n) Schicht(en) möglich ist.

Bei einer hohen mechanischen Druckbeaufschlagung und in der Folge bei einer Volumsveränderung eines erfindungsgemäßen Körpers verformen sich Teile der Massebereiche der Schichten im Stapel plastisch, fließen in die Freiräume und erbringen dadurch in Summe die Weglänge der Gesamtverformung in Richtung der Krafteinwirkung, woraus eine Energieaufnahme resultiert. Bei einem Fließen von Teilbereichen der Masse in hohem Ausmaß oder bei spröden Werkstoffen kann es letztlich zu Materialbrüchen kommen, die zu einer Ansammlung von Teilen oder Bruchstücken in den Freiräumen führen und gegebenenfalls einen vorteilhaften, gewünschten Kraft-Weg-Verlauf gegen Ende der vorgesehenen Verformungstrecke sicherstellen. Derart kann durch eine Werkstoffwahl, durch eine Ausformung und Dimensionierung der Massebereiche und der Freiräume in Draufsicht und in der Höhe einer Schicht und durch die Anzahl der Schichten im Stapel das Verformungsverhalten eines erfindungsgemäßen Körpers genau bestimmt und/oder eingestellt werden.

Eine geometrische Gestaltung der Massebereiche sowie der Freiräume der Schichten im Stapel und deren Fügung ermöglicht ein Ausbilden unterschiedlicher Verformungskriterien in Abhängigkeit der Richtung einer Kraftbeaufschlagung eines derart gebildeten Körpers. Demzufolge ist es möglich, einen Körper nach der Erfindung herzustellen, welcher in verschiedenen Beanspruchungs- bzw. Verformungsrichtungen jeweils ein gewünscht unterschiedliches Deformationsverhalten im Hinblick auf den Kraft-Weg-Verlauf bzw. einer Energieaufnahme zeigt.

Wenn, nach einer Ausführungsform der Erfindung die Schichten aus gelochtem Flachmaterial bestehen, kann auf einfache Weise, zum Beispiel durch Stanzen eines Bleches, eine gewünschte geometrische Form der Massebereiche und Freiräume einer Schicht hergestellt werden. In der Folge werden die jeweiligen Schichten derart zu einem Stapel zusammengefasst, dass die Freiräume oder Durchbrüche einer Schicht mit Massebereichen der benachbarten Schichten korrespondieren.

Für eine besonders wirtschaftliche Fertigung sowie für eine weite Gestaltungsfreiheit der Verformungseigenschaften eines Körpers gemäß der Erfindung kann vorgesehen sein, dass im Stapel die Schichten derart positioniert sind, dass die Anlageflächen an einer Seite und die Anlageflächen an der gegenüberliegenden Seite der Massebereiche einer Schicht für die Anlagen der jeweiligen Folgeschicht senkrecht zur Stapelrichtung gegeneinander versetzt sind. Bei einer solchen Ausführungsform der Erfindung können bei einer Volumsverkleinerung des Körpers die Massebereiche der Schichten weiter als der Schichtdicke entspricht in den Freiraum der Folgeschichten eingebogen werden, bevor allmählich durchgehende Anlageflächen in Stapelrichtung gebildet werden. In der Folge kann das Material in die verbliebenen Räume durch Fließen eingebracht werden, wofür jedoch erhöhte Spannungen erforderlich sind.

Ein Kraft-Weg-Diagramm einer Verformung eines Körpers in obiger Ausführung zeigt in einem weiten Bereich mäßig steigende Kräfte, die gegen Ende des Verformungsweges eine starke Erhöhung erfahren.

Ein geringes Gewicht und ein großer Verformungsweg bei einer durch Druckbeaufschlagung bewirkten Volumsverkleinerung kann ein Körper aufweisen, wenn die Massebereiche der Schichten aus runden oder profilierten Stäben bestehen, die im Stapel zu einer Art Gitter aufeinander positioniert sind. Die Stäbe von jeweils zwei Schichten können dabei auch miteinander verflochten sein oder sie werden aufeinander gelegt und/oder vorzugsweise zu einem Stapel gefügt.

Dabei ist es auch möglich, beispielsweise zur Ausbildung eines richtungsabhängigen Verformungsverhalten eines Teiles bzw. des Körpers die Stäbe der Lagen jeweils mit einem schiefen Winkel zueinander zu positionieren.

Es kann auch im Hinblick auf eine wirtschaftliche Herstellung eines Körpers nach der Erfindung und auf dessen Verformungsverhalten bei einer Kraftbeaufschlagung günstig sein, wenn die Massebereiche der Schichten im Stapel mit einem oder jeweils mit mehr als einem Werkstoff gebildet sind.

Für eine nur geringfügige Kraftzunahme bei einer Volumsverminderung eines Körpers zumindest im Anfangsbereich, vorzugsweise in einem großen Teilbereich der Verformung kann es vorteilhaft sein, wenn die Massebereiche der Schichten mit einem oder mit mehr als einem metallischen Werkstoff gebildet sind.

In Weiterbildung der Erfindung hat es sich im Hinblick auf eine Vielfalt der Anwendungsmöglichkeiten eines erfindungsgemäßen Körpers, von welchem verschiedenste Verformungs- oder Stauchkriterien gewünscht werden, als höchst vorteilhaft herausgestellt, wenn die Massebereiche der Schichten mit jeweils Nichtmetallen, zum Beispiel Kunststoff, und/oder mit Metall, zum Beispiel Leichtmetall, und/oder Verbundwerkstoffen, zum Beispiel Metallkeramikverbunden, und/oder Keramik gebildet sind.

Kunststoffe und Leichtmetalle haben an sich schon eine geringe Dichte, so dass bis zu deren Elastizitätsgrenze formstabile Leichtbauteile, insbesondere Sicherheitsteile mit äußerst geringem Gewicht hergestellt werden können. Unter Zugrundelegung einer für den jeweiligen Werkstoff vorteilhaften Ausbildung der Schichten sind für einen stärkeren Anstieg der Kräfte bei einer Deformation des Teiles die Massebereiche mit Vorteil aus Kunststoffen zu fertigen, hingegen zeichnet sich Leichtmetall durch größere Stauchwege bei einer Volumsverkleinerung mit geringem Anstieg der Verformungskraft aus. Weiters sind Kunststoffe leicht und wirtschaftlich herstellbar, hingegen sind aus duktilem Metall, beispielsweise aus Aluminiummetall, gefertigte Komponenten gut kaltverformbar, wobei sich diese legierungstechnisch leicht im Hinblick auf gewünschte Werkstoffeigenschaften einstellen lassen.

Soll für einen Körper ein "Collapse-Verhalten" derart gewünscht werden, dass sich während der Verformung die Druckkraft in Abhängigkeit des Weges progressiv erhöht, so kann dies in einfacher Weise dadurch erreicht werden, dass die Massebereiche und Freiräume in den Schichten im Stapel kontinuierlich steigend beabstandet sind. Bei einem Stauchen bzw. bei einer Volumsverkleinerung eines im vorgehenden Satz gekennzeichneten Körpers verbiegen sich anfangs alleine diejenigen Massebereiche einer Schicht, deren Stützflächen den größten Abstand zueinander aufweisen. Ist die Biegeverformung dieser Massebereiche erschöpft oder limitiert, werden im Stapel Massebereiche mit kleineren Stützflächenabständen verformt, was naturgemäß eine höhere Druckbeaufschlagung erfordert. Auf einfache Weise ist derart nach der Erfindung eine Vielzahl von Möglichkeiten gegeben, das Stauchverhalten bzw. das jeweilige Kraft-Weg-Verhältnis bei einer Verformung und dadurch auch die Energieaufnahme einzustellen.

Eine weitere Möglichkeit ein "Collapse-Verhalten" eines erfindungsgemäßen Körpers zu bestimmen, kann dadurch erreicht werden, dass die Höhe der Schichten im Stapel unterschiedlich, vorzugsweise in einer Richtung steigend, gebildet ist.

Eine Energieaufnahme der vorgenannten Körper bei einer Volumsverkleinerung ist letztlich durch ein Verformen im Wesentlichen durch Biegung und durch ein Fließen von Teilen der Massebereiche in zwischenliegende Freiräume bestimmt.

Die zusammenhängenden Massebereiche der Schichten sind zumeist auf einfache Weise aus verformtem Metall erstellt. Es ist jedoch auch möglich, und kann insbesondere bei dreidimensional gekrümmten Körpern technisch vorteilhaft und wirtschaftlich günstig sein, wenn die Lagen durch Gießen, zum Beispiel durch Formgießen, Druckgießen und dergleichen oder durch Einbringen von Hohlen sowie Schlitzen im Flachmaterial, hergestellt sind.

Erfindungsgemäß ist es von Vorteil, wenn die Lagen im Stapel gefügt sind und/oder der Stapel ummantelt ist. Ein Fügen nach DIN 8593 kann dabei in günstiger Weise durch Zusammensetzen, Einpressen, Schweißen, Löten, Kleben und dergleichen erfolgen.

Wenn ein Körper nach der Erfindung insbesondere als großflächiger Teil allein im gefügten Zustand der Schichten im Stapel verwendet wird, besitzt dieser aufgrund der zusammenhängenden Hohl- bzw. Freiräume auch besonders gute schalldämmende Eigenschaften.

Ein Ummanteln des Stapels andererseits hat nicht nur gegebenenfalls optische Vorteile, sondern es können damit auch auf einfache Weise eine Kompaktierung des Stapels und eine dergleichen Anbringung von Befestigungselementen erreicht werden.

Im Folgenden wird die Erfindung anhand von jeweils lediglich einen Ausführungsweg darstellenden schematischen Zeichnungen näher erläutert.

Es zeigen:
Fig. 1: Körper gebildet mit Schichten aus Flachmaterial in Draufsicht;
Fig. 1 A: Körper nach Fig. 1 im Schnitt;
Fig. 1 B: Körper nach Fig. 1 im Schnitt;
Fig. 1 C: Körper nach Fig. 1 in schräger Ansicht;
Fig. 2 A: Körper gebildet mit Schichten aus Stabmaterial im Schnitt;
Fig. 2 B: Körper nach Fig. 2A in Draufsicht;
Fig. 3: Körper gebildet mit Schichten aus Stabmaterial mit unterschiedlicher Höhe im Schnitt;
Fig. 4: Körper gebildet mit Schichten aus Stabmaterial mit unterschiedlicher Dicke im Schnitt;
Fig. 5: Körper gebildet mit Schichten aus Stabmaterial mit unterschiedlichem Stababstand im Schnitt;
Fig. 6: Körper gebildet mit Schichten aus Profilstäben im Schnitt;
Fig. 7: Körper gebildet mit Schichten aus Profilstäben im Schnitt.

In den Figuren werden die nachfolgend aufgelisteten Bezugszeichen verwendet.
K = Körper
S = Schicht
M = Massebereich
F = Freiraum
N = Anlagefläche
S_{R} = Stapelrichtung
H = Schichthöhe
D = Breite der Massebereiche
A = Abstand der Massebereiche
Z = Abstützung für Stapel

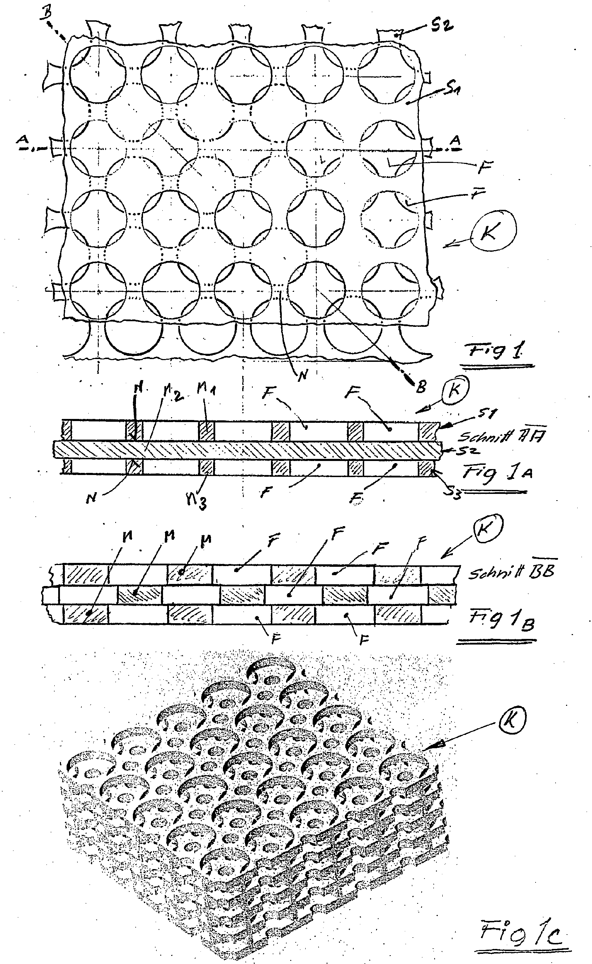

Fig. 1 zeigt einen Körper in Draufsicht, wobei Schichten **s₁, s₂** und **s₃** aus einem Flachmaterial gebildet sind und runde Freiräume **F** besitzen. Die Schichten sind in einem Stapel derartig übereinander positioniert, dass jeweils ein Freiraum F einer Schicht mit einem Massebereich **M** einer Folgeschicht korrespondiert.

Schnitte **AA** und **BB** vom Stapel mit jeweils drei Schichten von Fig. 1 sind in Fig. 1A und Fig. 1B dargestellt.

Fig. 1A zeigt einen Schnitt **AA** von aufeinander positionierten Schichten **S₁, S₂** und **S₃** eines Stapels in Richtung eines durchgehenden Massebereiches **M₂** in einer Schicht.

Aus Fig. 1B ist ein Schnitt **BB** ersichtlich, welcher 45° zum Schnitt **AA** gerichtet ist und in Richtung der Freiräume in den Schichten verläuft.

Fig. 1C gibt einen erfindungsgemäßen Körper **K** in schräger Ansicht wieder.

Aus den Darstellungen von Fig. 1 kann entnommen werden, dass Anlageflächen **N** von benachbarten Schichten **S₁, S₂** und **S₃** nur einen geringen Anteil vom Querschnitt eines Körpers **K** aufweisen und somit bei Druckbelastung desselben eine hohe spezifische Pressung erfahren. Übersteigt nun die Pressung in den Anlagebereichen die Elastizitätsgrenze eines Werkstoffes, aus welchem die Schichten bzw. die Massebereiche derselben gebildet sind, so verformen sich diese Massebereiche ebendort und fließen in Richtung von Freiräumen. Eine Verformung erfolgt dabei mit einer Volumsverkleinerung eines erfindungsgemäßen Körpers, welche mit einer Energieaufnahme verbunden ist.

Durch unterschiedliche Ausbildungsformen von Massebereichen, Freiräumen und Höhen von Schichten und durch gewählte Stapelabmessungen sowie durch eine Werkstoffwahl ist es möglich, die Kraft beim Eintritt einer Verformung und den Anstieg der Kraft bei einer Volumsverkleinerung des Körpers sowie das Ausmaß einer Verformungsstrecke einzustellen und derart die Energieaufnahme zu bestimmen. Dies gilt im Wesentlichen für alle Ausführungsformen eines erfindungsgemäßen Körpers.

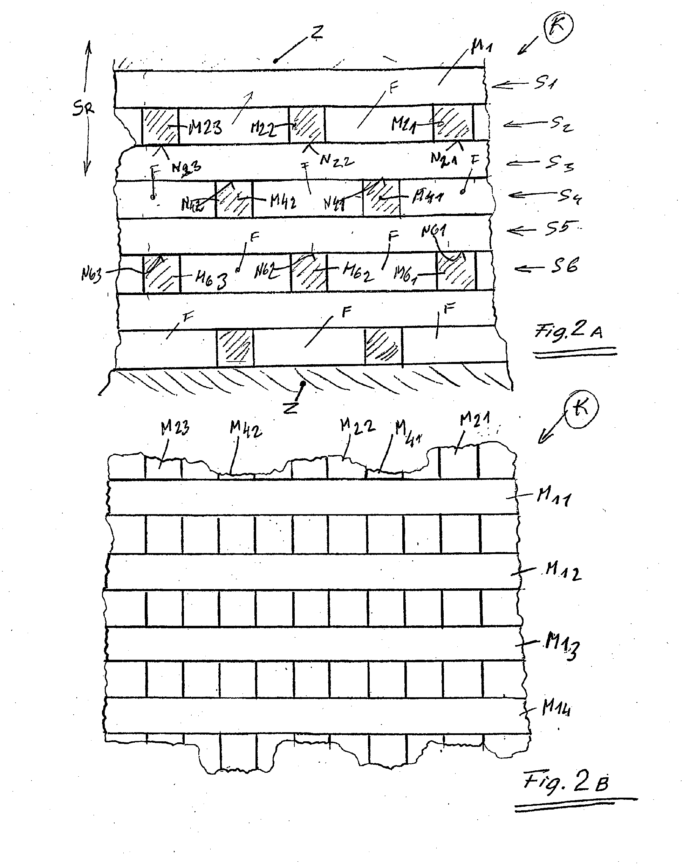

Aus Fig. 2A ist in Ansicht und aus Fig. 2B in Draufsicht ein Stapel, gebildet mit Schichten **S₁, S₂, S₃, S₄, S₅, S₆...,** ersichtlich. Jede Schicht **S** besteht aus einer Mehrzahl von Massebereichen **M,** welche jeweils aus profilierten Stäben gebildet sind. Stäbe von benachbarten Schichten sind mit einem Winkel von 90° zueinander positioniert und bilden im Stapel eine Art Gitter.

Erfolgt eine Druck-Kraftbeaufschlagung eines Körpers mittels Abstützungen **Z** für einen Stapel in Stapelrichtung **S_{R}** (Fig. 2 A), bei welcher die Elastizitätsgrenze für eine Biegung von Stäben der Schichten **S** überschritten wird, werden die Massebereiche **M** in die den Anlagen **N** gegenüber liegenden Freiräume F eingesenkt. Diese Einsenkung durch plastische Biegeverformung von Stäben setzt sich bei einer steigenden Druckkraftbeaufschlagung und Volumsverringerung der Körper **K** so lange fort, bis im Wesentlichen alle Massebereiche **M** der Schichten **S** in Stapelrichtung **S_{R}** mit den Anlageflächen **N** einen zu den Abstützungen **Z** durchgehenden Kontakt ergeben. Bei einer Fortsetzung und Erhöhung der Druckkraft bewirken die hohen Druckspannungen in den aneinander anliegenden Massebereichen **N** ein Fließen des Werkstoffes und ein Eindrücken desselben in die restlichen Freiräume **F** hinein.

Ein diesbezügliches Kraft-Weg-Diagramm zeigt ein erstes Verformen des Körpers **K** mit geringer und gering steigender Druckkraft über beachtliche Wegstrecken, gefolgt von einem steilen Kraftanstieg über gegebenenfalls kürzere Verformungsdistanzen.

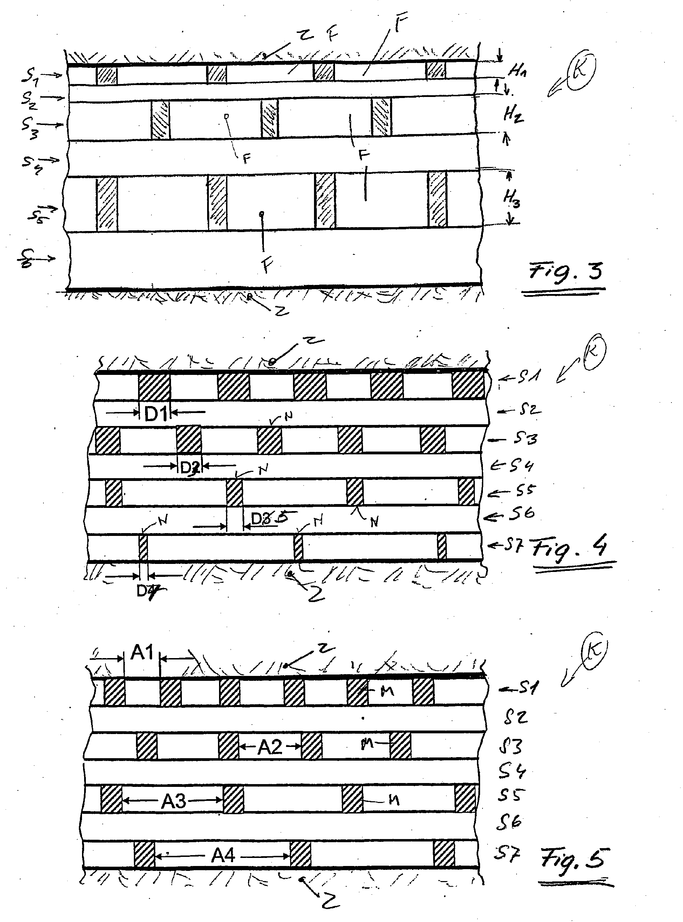

Fig. 3, Fig. 4 und Fig. 5 sowie Fig. 6 und Fig. 7 veranschaulichen weitere Möglichkeiten einer Ausbildung von Massebereichen **M** und Freiräumen **F** in einem Stapel.

Fig. 3 zeigt Schichten **S₁, S₃, S₅** in einem Stapel, welche unterschiedliche Höhen **H₁, H₃, H₅** besitzen. Bei gleicher Kraftbeaufschlagung eines Körpers **K** gemäß Fig. 3 werden sich auf Grund der unterschiedlichen Höhen H und somit verschiedener Widerstandsmomente der stabförmigen Massebereiche **M** der Schichten **S** diese jeweils verschieden stark durchbiegen und können sich mit steigendem Druckkräften zwischen den Auflageflächen **N** in einer Reihenfolge zu größeren Höhen hin, im Wesentlichen aufeinander folgend, plastisch in Freiräume **F** benachbarter Schichten **S** einsenken.

In Fig. 4 sind Schichten **S** mit gleicher Höhe, jedoch mit jeweils unterschiedlichen Breiten D der Massebereiche dargestellt. Schmale Stäbe bzw. Massebereiche **M** erreichen bei einer steigenden Druckbelastung des Körpers **K** früher die Fließgrenze im Bereich deren Anlageflächen **N,** so dass eine Verformung in einer Reihenfolge zu größeren Breiten **D** der Massebereiche **M** hin erfolgt und insgesamt eine progressive Druckkrafterhöhung über die Verformungsstrecke des Stapels erreicht werden kann.

In Fig. 5 sind Schichten **S** mit gleicher Querschnittsfläche der Massebereiche **M,** jedoch mit unterschiedlichen Abständen **A** derselben zueinander dargestellt, womit wiederum ein im Wesentlichen Aufeinanderfolgen einer plastischen Verformung deren Schichten **S** erzielbar ist.

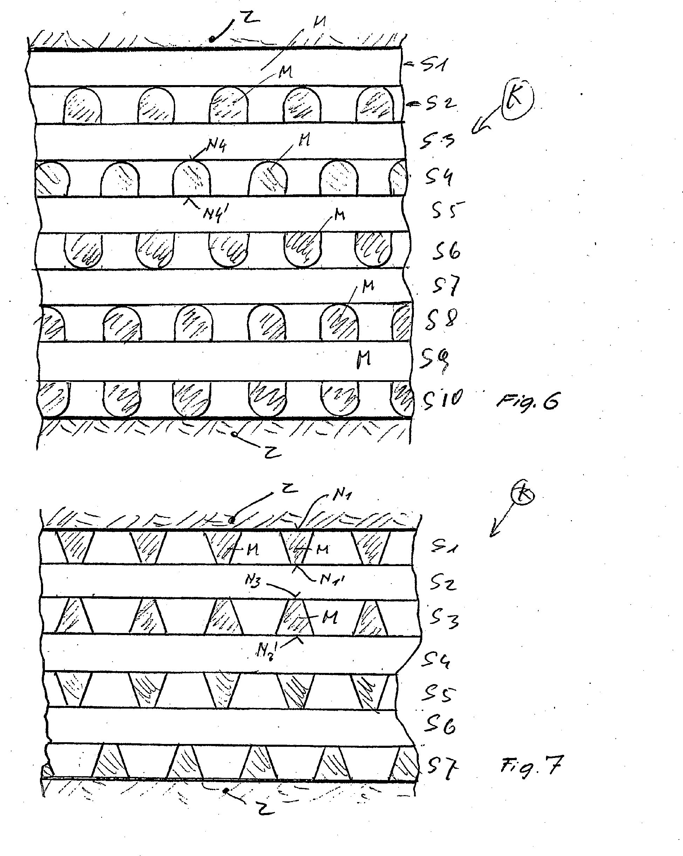

Aus Fig. 6 und Fig. 7 sind Anordnungen von Massebereichen **M** aus profilierten Stäben im Stapel zu ersehen.

Fig. 6 zeigt einseitig zylindrische Stäbe in Schichten **S** in drei Arten einer Positionierung im Stapel. Den Stäben gemäß **S₇** wird bei einer Volumsverringerung des Körpers **K** die größte Biegeverformung erteilt, hingegen werden die Massebereiche **M** nach **S₉** im Wesentlichen durch Fließen im Bereich von Anlageflächen **N** verformt.

Fig. 7 zeigt prinzipiell für Schichten **S** gleichartige Verformungsbedingungen im Stapel wie jene, die in Fig. 6 gezeigt sind.

Bei einer Verformung der Massebereiche **M** durch Verdrängung derselben in Freiräumen mittels Fließens stellen die Flächenpressung und das Überschreiten der Fließgrenze des Werkstoffes an den Anlageflächen **N** die Hauptkriterien dar. Für eine Verformung durch Biegung resultieren diese im Wesentlichen aus Biegemoment und dem Widerstandsmoment der Massebereiche **M** in den Schichten **S,** wobei letztlich eine Mischform der plastischen Formänderungen für eine Volumsänderung des Körpers **K** bzw. eine Verformung desselben entlang einer Wegstrecke, verursacht durch Druckkräfte, bestimmend ist und derart eine Energieaufnahme des erfindungsgemäßen Systems kennzeichnet.

## Patentansprüche

1. Plastisch verformbare Dämpfungs- und/oder Sicherheitskomponente mit geringem Raumgewicht, welche bei erhöhter Druckbeanspruchung unter Energieaufnahme volumenverkleinernd verformbar ist, **dadurch gekennzeichnet, dass** die Komponente aus mindestens zwei in einem Stapel angeordneten Schichten (S) besteht und jede Schicht (S) in der Fläche verteilt mit beidseitig Anlagen (N) für eine Folgeschicht oder für Abstützungen aufweisenden Massebereichen (M) und Freiräumen (F) gebildet ist, wobei im Stapel die Schichten (S) derart positioniert sind, dass jeweils die Massebereiche (M) außerhalb von Anlageflächen mit Freiräumen (F) einer benachbarten Schicht (S) korrespondieren, um bei erhöhter Druckbeanspruchung ein Einfließen von Material einer Schicht (S) in die Freiräume (F) einer angrenzenden Schicht (S) zu ermöglichen.

2. Komponente nach Anspruch 1, **dadurch gekennzeichnet, dass** die Schichten (S) aus gelochtem Flachmaterial bestehen.

3. Komponente nach Anspruch 1, **dadurch gekennzeichnet, dass** im Stapel die Schichten (S) derart positioniert sind, dass die Anlageflächen an einer Seite und die Anlageflächen an der gegenüberliegenden Seite der Massebereiche (M) einer Schicht (S) für die Anlagen (N) der jeweiligen Folgeschicht senkrecht zur Stapelrichtung (S_{R}) gegeneinander versetzt sind.

4. Komponente nach Anspruch 1 oder 3, **dadurch gekennzeichnet, dass** die Massebereiche (M) der Schichten (S) aus runden oder profilierten Stäben bestehen, die im Stapel zu einer Art Gitter aufeinander positioniert sind.

5. Komponente nach einem der Ansprüche 1 bis 4, **dadurch gekennzeichnet, dass** die Massebereiche (M) der Schichten (S) im Stapel mit einem oder jeweils mit mehr als einem Werkstoff gebildet sind.

6. Komponente nach einem der Ansprüche 1 bis 5, **dadurch gekennzeichnet, dass** die Massebereiche (M) der Schichten (S) mit einem oder mit mehr als einem metallischen Werkstoff gebildet sind.

7. Komponente nach einem der Ansprüche 1 bis 6, **dadurch gekennzeichnet, dass** die Massebereiche (M) der Schichten (S) mit jeweils Nichtmetallen, zum Beispiel Kunststoff, und/oder mit Metall, zum Beispiel Leichtmetall, und/oder Verbundwerkstoffen, zum Beispiel Metallkeramikverbunden, und/oder Keramik gebildet sind.

8. Komponente nach einem der Ansprüche 1 bis 7, **dadurch gekennzeichnet, dass** die Massebereiche (M) und Freiräume (F) in den Schichten (S) im Stapel kontinuierlich steigend beabstandet sind.

9. Komponente nach einem der Ansprüche 1 bis 8, **dadurch gekennzeichnet, dass** die Höhe (H) der Schichten (S) im Stapel unterschiedlich, vorzugsweise in einer Richtung steigend ist.

10. Komponente nach einem der Ansprüche 1 bis 9, **dadurch gekennzeichnet, dass** die Schichten (S) durch Gießen, zum Beispiel durch Formgießen, Druckgießen und dergleichen, oder durch ein Einbringen von Hohlen sowie Schlitzen in ein Flachmaterial hergestellt sind.

11. Komponente nach einem der Ansprüche 1 bis 10, **dadurch gekennzeichnet, dass** die Schichten (S) im Stapel wenigstens teilweise gefügt sind und/oder der Stapel ummantelt ist.

## Claims

1. A plastically deformable damping- and/or safety component with a small volumetric weight, which with increased compressive stress under energy absorption is deformable in a volume-reducing manner, **characterized in that** the component consists of at least two layers (S) arranged in a stack, and each layer (S) is formed distributed over the surface with material regions (M) having on both sides abutments (N) for a subsequent layer or for supports, and free spaces (F), wherein in the stack the layers (S) are positioned such that respectively the material regions (M) outside abutment surfaces correspond with free spaces (F) of an adjacent layer (S), in order to enable, in the case of increased compressive stress, an introduction of material of one layer (S) into the free spaces (F) of an adjoining layer (S).

2. The component according to claim 1, **characterized in that** the layers (S) consist of perforated flat material.

3. The component according to claim 1, **characterized in that** in the stack the layers (S) are positioned such that the abutment surfaces on one side and the abutment surfaces on the opposite side of the material regions (M) of a layer (S) for the abutments (N) of the respective subsequent layer are offset with respect to one another perpendicularly to the stack direction (S_{R}).

4. The component according to claim 1 or 3, **characterized in that** the material regions (M) of the layers (S) consist of round or profiled bars, which are positioned on one another in the stack to form a type of grid.

5. The component according to one of claims 1 to 4, **characterized in that** the material regions (M) of the layers (S) are formed in the stack with one or respectively with more than one material.

6. The component according to one of claims 1 to 5, **characterized in that** the material regions (M) of the layers (S) are formed with one or with more than one metallic material.

7. The component according to one of claims 1 to 6, **characterized in that** the material regions (M) of the layers (S) are formed with respectively non-metals, for example plastic, and/or with metal, for example light metal, and/or composite materials, for example metal ceramic composites, and/or ceramic.

8. The component according to one of claims 1 to 7, **characterized in that** the material regions (M) and free spaces (F) in the layers (S) are spaced apart in the stack in a continuously increasing manner.

9. The component according to one of claims 1 to 8, **characterized in that** the height (H) of the layers (S) in the stack increases in a differing manner, preferably in one direction.

10. The component according to one of claims 1 to 9, **characterized in that** the layers (S) are produced by casting, for example by mould casting, pressure die casting and suchlike, or by an introduction of cavities and slots into a flat material.

11. The component according to one of claims 1 to 10, **characterized in that** the layers (S) are at least partially joined in the stack and/or the stack is encased.

## Revendications

1. Composante d'amortissement et/ou de sécurité à déformation plastique ayant un faible poids spécifique, qui est déformable en réduisant de volume sous absorption d'énergie en cas de sollicitation à la compression augmentée, **caractérisée en ce que** la composante est constituée d'au moins deux couches (S) disposées en une pile, et chaque couche (S) est formée avec, répartis sur la surface, des agencements (N) bilatéraux pour une couche consécutive ou pour des zones de masse (M) et des espaces libres (F) présentant des renforts, sachant que les couches (S) sont ainsi positionnées dans la pile que, respectivement, les zones de masse (M) correspondent, en-dehors de faces de d'agencement, aux espaces libres (F) d'une couche (S) voisine pour permettre une coulée de matière d'une couche (S) dans les espaces libres (F) d'une couche (S) adjacente lorsque la sollicitation à la compression est augmentée.

2. Composante selon la revendication 1, **caractérisée en ce que** les couches (S) sont en matériau plat percé.

3. Composante selon la revendication 1, **caractérisée en ce que** les couches (S) sont ainsi positionnées dans la pile que les faces d'agencement sur un côté des zones de masse (M) d'une couche (S) et les faces d'agencement sur le côté opposé sont décalées l'une contre l'autre verticalement au sens de la pile (S_{R}) pour les agencements (N) de la couche consécutive respective.

4. Composante selon la revendication 1 ou 3, **caractérisée en ce que** les zones de masse (M) des couches (S) sont constituées de baguettes rondes ou profilées qui sont positionnées l'une sur l'autre à la manière d'une grille dans la pile.

5. Composante selon l'une des revendications 1 à 4, **caractérisée en ce que** les zones de masse (M) des couches (S) sont formées dans la pile avec un matériau ou respectivement plus d'un matériau.

6. Composante selon l'une des revendications 1 à 5, **caractérisée en ce que** les zones de masse (M) des couches (S) sont formées avec un matériau métallique ou respectivement plus d'un matériau métallique.

7. Composante selon l'une des revendications 1 à 6, **caractérisée en ce que** les zones de masse (M) des couches (S) sont formées avec respectivement des métalloïdes, par exemple du plastique, et/ou avec du métal, par exemple du métal léger et/ou des matériaux composites, par exemple des composites métal-céramique, et/ou de la céramique.

8. Composante selon l'une des revendications 1 à 7, **caractérisée en ce que** les zones de masse (M) et les espaces libres (F) dans les couches (S) sont écartés de façon continuellement croissante dans la pile.

9. Composante selon l'une des revendications 1 à 8, **caractérisée en ce que** la hauteur (H) des couches (S) est croissante de façon différente dans la pile, de préférence dans un sens.

10. Composante selon l'une des revendications 1 à 9, **caractérisée en ce que** les couches (S) sont fabriquées par coulée, par exemple par coulée en moule, coulée sous pression et similaire, ou par l'apport de creux et de fentes dans un matériau plat.

11. Composante selon l'une des revendications 1 à 10, **caractérisée en ce que** les couches (S) sont jointées au moins partiellement dans la pile et/ou que la pile est enveloppée.
